Europäisches Patentamt

**European Patent Office**

Office européen des brevets

(11) Veröffentlichungsnummer: **0 091 029**
**B1**

(12) **EUROPÄISCHE PATENTSCHRIFT**

(45) Veröffentlichungstag der Patentschrift:
**27.08.86**

(51) Int. Cl.⁴: **G 01 T 3/00**

(21) Anmeldenummer: **83102963.2**

(22) Anmeldetag: **24.03.83**

(54) Von fremden Spannungsquellen unabhängiger Neutronendetektor mit hoher Ansprechempfindlichkeit.

(30) Priorität: **07.04.82 DE 3213078**

(43) Veröffentlichungstag der Anmeldung:
**12.10.83 Patentblatt 83/41**

(45) Bekanntmachung des Hinweises auf die Patenterteilung:
**27.08.86 Patentblatt 86/35**

(84) Benannte Vertragsstaaten:
**CH DE FR GB LI NL SE**

(56) Entgegenhaltungen:
**DE - A - 2 360 221**
**DE - A - 2 430 295**
**DE - A - 2 710 648**
**GB - A - 2 024 508**
**US - A - 3 375 370**
**US - A - 3 986 032**

(73) Patentinhaber: **INTERATOM Gesellschaft mit beschränkter Haftung, Friedrich-Ebert-Strasse, D-5060 Bergisch Gladbach 1 (DE)**
Patentinhaber: **Kernforschungsanlage Jülich Gesellschaft mit beschränkter Haftung, Postfach 1913, D-5170 Jülich 1 (DE)**

(72) Erfinder: **Brixy, Heinz, Dr. Dipl.-Phys., Taubenforst 4, D-5162 Niederzier (DE)**
Erfinder: **Spillekothen, Hans-Gerd, Auf dem Knippen 20, D-5064 Rösrath-Forsbach (DE)**
Erfinder: **Benninghofen, Günter, Eltersbach 35, D-5203 Much (DE)**
Erfinder: **Serafin, Norbert, Adalbert-Stifter-Weg 35, D-5600 Wuppertal (DE)**

(74) Vertreter: **Mehl, Ernst, Dipl.-Ing. et al, Postfach 22 01 76, D-8000 München 22 (DE)**

**Beschreibung**

Die vorliegende Erfindung betrifft einen von fremden Spannungsquellen unabhängigen Neutronendetektor nach dem Oberbegriff des ersten Anspruchs. Promptanzeigende von fremden Spannungsquellen unabhängige Neutronendetektoren werden zur kontinuierlichen Messung der Neutronenflussdichte in oder nahe des Kerns von Kernreaktoren verwendet. Sie liefern bei Neutronenbestrahlungen aufgrund von (n, $\gamma$)-Prozessen Compton- oder Photoelektronen, die einen Strom darstellen und damit ein dem Neutronenfluss proportionales Messsignal bilden. Vorteile gegenüber Spalt- oder Ionisationskammern haben diese Neutronendetektoren unter anderem durch die geringeren Abmessungen, den einfachen und daher robusten Aufbau, Temperaturbeständigkeit bis zu 800°C und einen Messbetrieb ohne Anlegen einer Spannung.

Bei der Inneninstrumentierung von Kernreaktoren sind derartige Neutronendetektoren bekannt, bei denen ein zylindrischer Emitter von einem Kollektor ummantelt ist, wobei beide durch eine Isolierschicht elektrisch getrennt sind. Aus der DE-A-2 360 221 ist auch schon ein grossflächiger, von fremden Spannungsquellen unabhängiger Neutronendetektor bekannt, bei dem durch die Wahl eines grossflächigen Emitters die Neutronenempfindlichkeit deutlich erhöht ist. Dieser Detektor kann zur kontinuierlichen Messung der Neutronenflussdichte im kernnahen Bereich eingesetzt werden. Bei diesem Detektor ist der Emitter als grossflächiges Rohr ausgebildet, dem je ein Rohr auf der Innen- und Aussenseite als Kollektor zugeordnet ist. Emitter und Kollektoren sind durch keramische Isolatoren, z.B. $Al_2O_3$ elektrisch voneinander getrennt. Die beiden Kollektorrohre sind vom Emitter gleich weit entfernt und überragen den Emitter etwas an den Stirnseiten. Man erhält dadurch einen geschützten, mechanisch festen Aufbau für das ganze Gebilde. Als Material für den Emitter wurden Cadmium und Gadolinium vorgeschlagen. Bei bisherigen Ausführungsformen wurde allerdings nur Cadmium benutzt, da bisher angenommen wurde, dass Gadolinium ein schnell ausbrennender Werkstoff ist, der sich nicht ohne weiteres für einen Langzeiteinsatz in Neutronendetektoren eignet.

Aus der DE-A-24 30 295 ist auch bekannt, den Emitter eines Neutronendetektors mit einer dünnen Schwermetallschicht zu umgeben, um niederenergetische Elektronen, die durch Gammastrahlung von aussen erzeugt werden, möglichst abzuschirmen, während hochenergetische, vom Emitter kommende Elektronen durchgelassen werden. Dadurch kann das Signal-/Rausch-Verhältnis verbessert werden.

Auch aus der DE-A-27 10 648 ist eine solche Umgebungsschicht um den Emitter bekannt, von der auch erwähnt wird, dass diese Schicht die Wahrscheinlichkeit der Entstehung von Compton- und Photoelektronen aus der vom Emitter ausgesandten Gammastrahlung erhöht. Ein Hinweis darauf, dass bei Vorhandensein von Umgebungsschichten um den Emitter dieser sehr dünn sein und aus Gadolinium bestehen kann, ist diesen Schriften jedoch nicht zu entnehmen.

Aufgabe der vorliegenden Erfindung ist es, die Neutronenempfindlichkeit und Lebensdauer eines von fremden Spannungsquellen unabhängigen Neutronendetektors bei sparsamen Einsatz von teuren Materialien zu erhöhen und ihn für einen Langzeiteinsatz geeignet zu machen.

Die Lösung dieser Aufgabe ist dem Hauptanspruch zu entnehmen. Gadolinium hat gegenüber anderen Materialien einen sehr hohen Absorptionsquerschnitt für thermische Neutronen, so dass der Emitter sehr dünn gewählt werden kann, ohne dass die Empfindlichkeit darunter leidet. Da Gadolinium ein sehr teures Material ist, kommt eine Verwendung erst bei sehr geringen benötigten Mengen in Betracht. Durch eine hohe Selbstabschirmung von Gadolinium findet die Neutronenabsorption vorwiegend in einem sehr kleinen Bereich der äusseren Schicht des Emitters statt, weshalb eine dickere Ausführung des Emitters keine bessere Empfindlichkeit bedeutet. Nachteilig wirkt sich die geringe Emitterdicke jedoch auf die Compton- und Photoelektronenproduktion aus, welche letztendlich das Signal darstellen. Man kann nun die Neutronenempfindlichkeit dadurch steigern, dass der Emitter auf der Innen- und/oder Aussenseite mit einer Hilfsemitterschicht versehen wird. In dieser Hilfsemitterschicht findet dann die Bildung von Compton- und Fotoelektronen durch die aus dem Emitter kommende $\gamma$-Strahlung statt. Dieses erfindungsgemässe Prinzip kann für jede Ausführungsform eines von fremden Spannungsquellen unabhängigen Neutronendetektors verwendet werden. Statt einen dicken Emitter zu verwenden, welcher nach Einfang von Neutronen direkt Elektronen aussendet, kann nunmehr ein sehr dünner und damit billiger Gadolinium-Emitter verwendet werden, welcher nach Neutroneneinfang $\gamma$-Strahlung aussendet. Diese wird in der Hilfsemitterschicht dann in $\beta$-Strahlung umgewandelt, welche dann das Messsignal bildet. Besonders geeignet ist die Verwendung dieses Prinzips bei grossflächigen Detektoren entsprechend der DE-A-23 60 221, wobei der Emitter dann auf beiden Seiten mit einer Hilfsemitterschicht versehen wird. Eine solche Ausführungsform ist für geringere Neutronenflüsse als Messgerät geeignet, z.B. bei der Ausseninstrumentierung von Hochtemperaturreaktoren. Messungen bei einem thermischen Neutronenfluss von $10^{13} \mathrm{cm}^{-2}\mathrm{s}^{-1}$ haben gezeigt, dass nach sieben Monaten Bestrahlungszeit noch kein Abbrand festzustellen war. Dies ist unter anderem darauf zurückzuführen, dass der gemittelte thermische Neutronenfluss über den Emitter infolge von Flussdepression und Selbstabschirmung nur ca. 2,5% des ungestörten Neutronenflusses beträgt. Bei der Verwendung von Gadolinium für eine Incore-Instrumentierung müsste gegebenenfalls wegen des erhöhten Abbrandes eine dickere Schicht gewählt werden.

In Ausgestaltung der Erfindung wird im Anspruch 2 vorgeschlagen, die Hilfsemitterschicht aus einem Material möglichst grosser Dichte und mit höherer Ordnungszahl als der des Isoliermaterials herzustellen. Dies begünstigt die Produktion von Compton- und Photoelektronen und ermöglicht auch eine verhältnismässig dünne Hilfsemitterschicht.

In besonderer Ausgestaltung der Erfindung wird im Anspruch 3 vorgeschlagen, als Isoliermaterial gegenüber dem Kollektor wie an sich bekannt $Al_2O_3$ mit einer Dichte von ungefähr $3,8 \, g/cm^3$ oder MgO zu verwenden. Gleichzeitig soll die Hilfsemitterschicht aus einer Nickel-Legierung mit einer Dichte von ungefähr $8,5 \, g/cm^3$ bestehen. Als geeignet hat sich eine Nickel-Basis-Legierung mit Kobalt, Chrom und Aluminium-Anteilen erwiesen. Dieses unter der geschützten Bezeichnung Inconel bekannte Material eignet sich sowohl für die Verwendung als Kollektor wie auch für die Verwendung als Hilfsemitterschicht.

Bei der Ausführung der Erfindung ist zu empfehlen, die Schichtdicke des Hilfsemitters so zu bemessen, dass ein Optimum zwischen Entstehung von Compton- und Photoelektronen und Emissionseigenschaften erreicht wird. Die Hilfsemitterschicht dürfen nämlich einerseits nicht so dick sein, dass die entstehenden Elektronen gar nicht aus ihnen herausgelangen, müssen aber andererseits so dick sein, dass ein möglichst grosser Teil der $\gamma$-Strahlen in Elektronen umgewandelt wird.

Im Anspruch 5 wird dementsprechend speziell für das Material Inconel (Warenzeichen) eine Dicke der Hilfsemitterschicht von etwa 0,5 mm vorgeschlagen. Bei dieser Dicke wird ein Optimum an Elektronenausbeute erreicht.

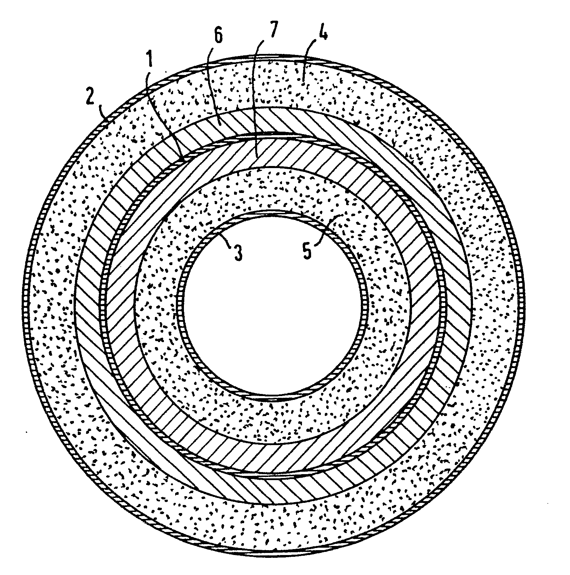

Ein Ausführungsbeispiel der Erfindung ist in der Zeichnung dargestellt und zwar zeigt die Zeichnung lediglich einen Querschnitt durch einen erfindungsgemässen Neutronendetektor, der bis auf die Hilfsemitterschichten sonst im prinzipiellen Aufbau dem Detektor der DE-A-23 60 221 gleicht.

Ein als Rohr aus einer dünnen Gadolinium-Folie ausgebildeter Emitter 1 ist konzentrisch in ein als Aussenkollektor 2 ausgebildetes Rohr und ein als Innenkollektor 3 ausgebildetes Rohr eingesetzt. Durch Isolierschichten 4, 5 sind die drei Rohre voneinander elektrisch isoliert. Der Emitter 1 ist auf seiner Aussenseite durch einen Hilfsemitter 6 und auf seiner Innenseite durch einen Hilfsemitter 7 umgeben. Die Hilfsemitter sind ebenfalls als Rohre ausgebildet und können beispielsweise aus dem gleichen Material bestehen wie die Kollektoren. Die ganze Anordnung hat einen Aussendurchmesser von etwa 6 cm und einer Länge, die je nach den Anforderungen in weiten Grenzen variierbar ist. Die elektrischen Anschlüsse und die Auswertung des Signals erfolgen wie in der DE-A-23 60 221 beschrieben. Aufgrund der höheren Empfindlichkeit des erfindungsgemässen Neutronendetektors werden allerdings kompliziertere Formen für die einzelnen Schichten, wie sie dort beschrieben sind, unnötig.

Mit dem erfindungsgemässen Aufbau eines fremdenenergiefreien Neutronendetektors wurde das Produkt aus Empfindlichkeit und Lebensdauer erheblich gesteigert.

## Patentansprüche

1. Von fremden Spannungsquellen unabhängiger Neutronendetektor, bestehend aus einem Emitter (1) aus einer Gadoliniumfolie mit nicht mehr als 1 mm Dicke, wobei der Emitter (1) von mindestens einem Kollektor (2 bzw. 3) durch eine elektrisch isolierende Schicht (4 bzw. 5) getrennt ist, dadurch gekennzeichnet, dass der Emitter (1) aus einer dünnen Schicht von nur etwa 0,1 mm Gadolinium besteht und auf seiner Innen- und/oder Aussenseite mit einer Hilfsemitterschicht (6 bzw. 7) versehen ist, in der durch die aus dem Emitter kommende Gammastrahlung die Bildung von Compton- und Photoelektronen, d.h. Betastrahlung, stattfindet, die das Messsignal bildet.

2. Neutronendetektor nach Anspruch 1, dadurch gekennzeichnet, dass die Hilfsemitterschicht (6 bzw. 7) aus einem Material hoher Dichte und mit höherer Ordnungszahl als der des die isolierende Schicht (4 bzw. 5) bildenden Stoffes besteht.

3. Neutronendetektor nach Anspruch 1 oder 2 mit einer isolierenden Schicht (4 bzw. 5) aus $Al_2O_3$ oder MgO, dadurch gekennzeichnet, dass die Hilfsemitterschichten (6 bzw. 7) aus einer Nickel-Legierung besteht.

4. Neutronendetektor nach einem der vorhergehenden Ansprüche, dadurch gekennzeichnet, dass die Hilfsemitterschicht (6 bzw. 7) aus einer Legierung auf Nickel-Basis mit Kobalt-, Chrom- und Aluminiumanteilen besteht und ihre Dicke etwa 0,5 mm beträgt.

5. Neutronendetektor nach einem der vorhergehenden Ansprüche, dadurch gekennzeichnet, dass der Detektor in an sich bekannter Weise aus einem rohrförmigen Emitter (1) und zwei konzentrisch dazu liegenden Kollektoren (2, 3) mit entsprechenden Isolierschichten (4, 5) besteht, wobei der Emitter (1) aus einer etwa 0,1 mm dicken Gadoliniumfolie besteht, an welche sich auf der Aussen- und Innenseite Hilfsemitterschichten (6, 7) aus Inconel (Warenzeichen) mit einer Stärke von etwa 0,5 mm anschliessen.

## Claims

1. A neutron detector which is independent of external voltage sources and which comprises an emitter (1) composed of a gadolinium foil whose thickness amounts to no more than 1 mm, where the emitter (1) is separated from at least one collector (2, 3) by an electrically insulating layer (4, 5), characterised in that the emitter (1) comprises a thin layer of only approximately 0.1 mm gadolinium and is provided on its inside and/or its outside with an auxiliary emitter layer (6, 7) in which the gamma radiation emanating from the emitter serves to form Compton- and photo-electrons, i.e. beta radiation, which forms the measurement signal.

2. A neutron detector as claimed in claim 1, characterised in that the auxiliary emitter layer (6, 7) comprises a material having a high density and a higher atomic number than the material which forms the insulating layer (4, 5).

3. A neutron detector as claimed in claim 1 or 2, with an insulating layer (4, 5) comprising $Al_2O_3$ or MgO, characterised in that the auxiliary emitter layers (6, 7) comprises a nickel alloy.

4. A neutron detector as claimed in one of the preceding claims, characterised in that the auxiliary emitter layer (6, 7) comprises an alloy of a nickel base including cobalt, chrome and aluminium components, and its thickness amounts to approximately 0.5 mm.

5. A neutron detector as claimed in one of the preceding claims, characterised in that the detector comprises a manner known per se a tubular emitter (1) and two collectors (2, 3) which are arranged so as to be concentric with the emitter and which are provided with corresponding insulating layers (4, 5), where the emitter (1) comprises an approximately 0.1 mm thick gadolinium foil, the outside and inside of which are adjoined by auxiliary emitter layers (6, 7) comprising Inconel (trademark) in a thickness of approximately 0.5 mm.

**Revendications**

1. Détecteur de neutrons, qui est indépendant de sources étrangères de tension et qui est constitué d'un émetteur (1) en une feuille de gadolinium d'une épaisseur qui n'est pas supérieure à 1 mm, l'émetteur (1) étant séparé d'au moins un collecteur (2 et 3) par une couche isolante électriquement (4 et 5), caractérisé en ce que l'émetteur (1) est en une couche mince de gadolinium de seulement 0,1 mm environ et est muni du côté intérieur et/ou du côté extérieur d'une couche formant émetteur auxiliaire (6 ou 7) dans laquelle se produit, sous l'effet du rayonnement gamma provenant de l'émetteur, la formation d'électrons Compton et de photoélectrons, c'est-à-dire le rayonnement bêta qui forme le signal de mesure.

2. Détecteur de neutrons suivant la revendication 1, caractérisé en ce que la couche formant émetteur auxiliaire (6 et 7) est en un matériau de grande masse volumique et ayant un numéro atomique plus élevé que celui de la matière formant la couche isolante (4 et 5).

3. Détecteur de neutrons suivant la revendication 1 ou 2, ayant une couche isolante (4 et 5) en $Al_2O_3$ ou en MgO, caractérisé en ce que les couches formant émetteur auxiliaire (6 et 7) sont en un alliage de nickel.

4. Détecteur de neutrons suivant l'une des revendications précédentes, caractérisé en ce que la couche formant émetteur auxiliaire (6 et 7) est en un alliage à base de nickel, avec des proportions de cobalt, de chrome et d'aluminium, et son épaisseur est de 0,5 mm environ.

5. Détecteur de neutrons suivant l'une des revendications précédentes, caractérisé en ce que le détecteur est constitué, d'une manière en soi connue, d'un émetteur (1) tubulaire et de deux collecteurs (2, 3) concentriques à celui-ci, avec des couches isolantes (4, 5) correspondantes, l'émetteur (1) étant constitué d'une feuille de gadolinium d'une épaisseur de 0,1 mm environ, à laquelle se raccordent, du côté intérieur et du côté extérieur, des couches formant émetteur auxiliaire (6, 7) en Inconel (marque de fabrique) ayant une épaisseur de 0,5 mm environ.